# EUROPÄISCHE PATENTSCHRIFT

(11) **EP 3 214 155 B1**
(45) Veröffentlichungstag und Bekanntmachung des Hinweises auf die Patenterteilung: **20.05.2020**
(21) Anmeldenummer: 17155870.3
(22) Anmeldetag: 13.02.2017
(51) Int. Cl.: C10B 47/44, C10J 3/48, C10J 3/66, C10J 3/72, C10K 1/08, C10K 1/32

(54) **VERFAHREN ZUR PRODUKTION VON SYNTHESEGAS ZUM BETREIBEN EINES VERBRENNUNGSMOTORS**
PROCESS FOR THE PRODUCTION OF SYNTHESIS GAS FOR RUNNING AN INTERNAL COMBUSTION ENGINE.
PROCÉDÉ POUR LA PRODUCTION DE GAZ DE SYNTHÈSE POUR LA COMBUSTION DANS UN MOTEUR À COMBUSTION INTERNE.

(30) Priorität: 04.03.2016 DE 102016103924
(43) Veröffentlichungstag der Anmeldung: 06.09.2017
(73) Patentinhaber: KOPF SynGas GmbH & Co. KG, 72172 Sulz-Bergfelden (DE)
(72) Erfinder: Judex, Johannes, 72072 Tübingen (DE)
(74) Vertreter: Kohler Schmid Möbus Patentanwälte

(56) Entgegenhaltungen:
- DE-A1-102010 018 197
- DE-U1-202012 002 872
- GB-A- 673 648

## Beschreibung

Die Erfindung betrifft ein Verfahren zur Produktion von Synthesegas zum Betreiben eines Verbrennungsmotors aus organischem Festbrennstoff, welcher in einem Pyrolyse-Reaktor ohne Sauerstoffzufuhr in Pyrolyse-Produkte aufgespalten wird, wobei anschließend sämtliche Pyrolyse-Produkte aus dem Pyrolyse-Reaktor von unten her einem weiteren Reaktor zugeführt werden, wobei ein im weiteren Reaktor erzeugtes Synthesegas dem weiteren Reaktor als Produktgas entnommen und direkt oder indirekt dem Verbrennungsmotor zugeführt wird, und wobei der Pyrolyse-Reaktor mit mindestens einer durch erwärmtes Gas extern beheizten Pyrolyse-Schnecke zur Förderung des Festbrennstoffs betrieben wird.

Ein solches Verfahren sowie die entsprechende Vorrichtung sind beispielsweise aus der DE 20 2012 002 872 U1 oder der DE 10 2010 012 487 A1 bekannt.

### Hintergrund der Erfindung

Zur Energiewandlung ist es bekannt, Festbrennstoffe zu vergasen. Für den Betrieb einer entsprechenden Vergasungsanlage haben sich dabei unterschiedliche Eigenschaften der verwendeten Festbrennstoffe, insbesondere bei organischen Festbrennstoffen, als kritisch erwiesen. Dies betrifft beispielsweise die Bildung von Teer bzw. die Reinigung der erzeugten Produkte von Teer, das Ascheschmelzverhalten der verwendeten Brennstoffe, die Entstehung und das Verhalten von Asche im Vergasungsprozess, Störstoffe wie H₂S, COS, NH₃ und HCN sowie die Entstehung von Stäuben in Verbindung mit Teer.

Während bei einer thermischen Nutzung von festen Brennstoffen lediglich auf Emissionsgrenzwerte geachtet werden muss, sind die Anforderungen bei einer Nutzung des erzeugten Synthesegases in einer Gasturbine, beispielsweise zur Stromerzeugung, wesentlich höher.

Beispielsweise können hohe Teergehalte im erzeugten Synthesegas bei einer motorischen Nutzung zu Schäden an nachgeschalteten Gasmotoren führen.

Obschon eine Verwertung biogener Abfallstoffe wie Klärschlamm schon aus Gründen des Umweltschutzes und der Nachhaltigkeit hochgradig erwünscht ist, ergeben sich gerade hierbei besondere Herausforderungen für eine Verwertung durch Vergasung.

Klärschlamm weist in der Regel einen hohen Ascheanteil sowie eine niedrige Ascheschmelztemperatur auf. Daher ist es zum Beispiel aufgrund des Ascheschmelzpunktes in der Regel nicht möglich, eine sekundäre Behandlung von Teer bei Festbrennstoffen wie Klärschlamm durch hohe Temperaturen in der Vergasungsanlage vorzusehen, um eine unerwünschte Schlackenbildung während der Vergasung zu vermeiden.

### Spezieller Stand der Technik

In dem aus der WO 2011/110 138 A1 bekannten Verfahren und der zugehörigen Vorrichtung zur Produktion von Synthesegas werden Pflanzenöle oder Diesel zur sekundären Reinigung des Synthesegases von Teer verwendet. Beschrieben wird hier eine Vorrichtung zur Produktion von Synthesegas zum Betreiben eines Verbrennungsmotors aus organischem Festbrennstoff, welcher in einem Pyrolyse-Reaktor ohne Sauerstoffzufuhr in Pyrolyse-Öl, Pyrolyse-Koks und Pyrolyse-Gas aufgespalten wird, wobei anschließend das Pyrolyse-Öl sowie der Pyrolyse-Koks einem Wirbelschicht-Reaktor zugeführt werden, welcher mittels Luftzufuhr mit einer Geschwindigkeit oberhalb der minimalen Lockerungsgeschwindigkeit des Bettmaterials der Wirbelschicht des Wirbelschicht-Reaktors fluidisiert wird, und wobei ein im Wirbelschicht-Reaktor erzeugtes Synthesegas dem Wirbelschicht-Reaktor als Produktgas entnommen und direkt oder indirekt dem Verbrennungsmotor zugeführt wird. Das Pyrolysegas wird vor der Verwendung mit beispielsweise RME gewaschen. Dies führt jedoch mitunter zu einer Verseifung des Waschmittels, sobald alkalireiche Brennstoffe verwendet werden.

Im Stand der Technik ist des Weiteren versucht worden, anstelle einer nachträglichen Entfernung von Teer bereits die Bildung von Teer zu vermeiden. Dazu wird beispielsweise in der DE 10 2007 012 452 A1 und der DE 10 2010 018 197 A1 vorgeschlagen, eine Pyrolyse bzw. eine Thermolyse dem eigentlichen Vergasungsprozess als Vor-Vergasung vorzuschalten. Die dort beschriebenen Prozesse eignen sich jedoch insbesondere für Brennstoffe mit einem geringen Ascheanteil sowie einer geringen Aschedichte, da Stäube den Reaktor als Flugasche verlassen.

In der WO 02/ 004 574 A1 wird ein Verfahren unter Verwendung einer Gegenstrom-Festbettpyrolyse vorgeschlagen. Im Pyrolyse-Gas enthaltene Teere werden zum Cracking durch ein heißes Koksbett geleitet. Der Koks wird in einem weiteren Schritt in einer Wirbelschicht verbrannt und ein Teil heißer Asche wird dem Koksbett zugeschlagen. Jedoch wird ein Wasserdampferzeuger benötigt, wodurch der Gesamtprozess komplexer und kostenaufwändiger wird. Auch verlaufen notwendige Reaktionen von Wasserdampf mit Teer deutlich langsamer als mit Luft sowie teilweise nicht vollständig ab.

In der WO 2010/ 015 593 A2 wird ein Prozess beschrieben, bei welchem in einer ersten allothermen Vergasung mit Wasserdampf in einer Wirbelschicht mit Hilfe von Brennern flüchtige Elemente aus einem Brennstoff entzogen werden und in einem nachgeschalteten Prozess Koks aus dem ersten Prozess, autotherm vergast wird. Beide Gasströme aus den Prozessen werden zusammengeführt und gemeinsam weiter verarbeitet. Zwar ist hier die Prozessführung einfacher zu führen, es ist jedoch ein Dampfkessel notwendig und zusätzliche Brennerenergie, um den ersten allothermen Prozess am Laufen zu halten. Darüber hinaus ist keine primäre Teerminderung vorgesehen, solange Gas aus dem ersten Prozess nicht mit Luft nachreagieren kann und/oder in intensiven Kontakt mit einem Koksbett kommt.

Auch in der bereits zitierten WO 2011/ 110 138 A1 wird ein zweistufiger Prozess vorgeschlagen. Brennstoff wird in einem Drehrohr pyrolysiert, dann in Koks und Gas getrennt und der Koks in einer *Wirbelschicht* vergast. Dieser Prozess ist technisch schwierig zu handhaben, da auf der heißen Seite eine Gas-Feststoff-Separation erforderlich ist. Das in diesem Verfahren aus dem Koks gewonnene Synthesegas soll anschließend wieder mit dem Pyrolysegas vermischt werden. Nachteilig dabei ist, dass die Druckverhältnisse sehr genau kontrolliert werden müssen. Weitere Probleme ergeben sich aus der Verwendung einer Trommel oder eines Drehrohres, da diese erfahrungsgemäß hohen Drücken nicht standhalten können. Nachteilig ist auch, dass in diesem Verfahren eingesetzte Saugzuggebläse nur eine geringe Lebenserwartung aufweisen. Durch Unterdruck in der Vorrichtung kommt es ferner zu einem Eintrag von Luft, wodurch unkontrollierte Ex-Zonen entstehen können.

Aus der DE 10 2010 012 487 A1 sind ein Verfahren und eine Vorrichtung der eingangs definierten Art zur Produktion von Synthesegas zum Betreiben eines Verbrennungsmotors aus organischem Festbrennstoff bekannt, welcher in einem Pyrolyse-Reaktor ohne Sauerstoffzufuhr in Pyrolyse-Produkte aufgespalten wird, wobei anschließend sämtliche Pyrolyse-Produkte aus dem Pyrolyse-Reaktor von unten her einem als Festbett-Reaktor ausgestalteten weiteren Reaktor zugeführt werden, wobei ein im weiteren Reaktor erzeugtes Synthesegas dem weiteren Reaktor als Produktgas entnommen und direkt oder indirekt dem Verbrennungsmotor zugeführt wird, und wobei der Pyrolyse-Reaktor mit mindestens einer Pyrolyse-Schnecke zur Förderung des Festbrennstoffs betrieben wird. Der Festbett-Reaktor umfasst eine Rührvorrichtung, die einerseits zur Durchmischung der in der Hochtemperaturzone befindlichen Feststoffschicht dient, um eine möglichst vollständige Umsetzung zu erreichen.

Im Gegensatz dazu steht ein Wirbelschicht-Reaktor, wie er etwa in der oben diskutierten WO 2011/ 110 138 A1 oder in der WO 02/ 004 574 A1 vorgeschlagen wird. Die Charakteristik einer Wirbelschicht ist die eines "idealen Rührkessels". Ein Durchmischungsrad wie in der DE 10 2010 012 487 A1 angegeben wäre für diesen Zweck eher hinderlich als hilfreich. Die genannte Charakteristik führt auch zu dem Fakt, dass innerhalb einer Wirbelschicht keine signifikant unterschiedlichen Temperaturzonen (z.B. Hochtemperaturzone) betrieben werden können.

Das Wort "Wirbelbett" wird in der DE 10 2010 012 487 A1 verwendet für eine geringe Staubfracht, die mit der Vergasungsluft in den Reaktor eingeblasen wird und auf diese Weise zirkulieren soll. Da es sich aber um einen sekundären Prozess handelt und der Hauptanteil der Massen -wie oben dargelegt- als Festbett vorliegt, handelt es sich bei dem weiteren Reaktor gemäß DE 10 2010 012 487 A1 nicht um einen Wirbelschicht-Reaktor, sondern vielmehr um einen Festbett-Reaktor.

### Aufgabe der Erfindung

Der vorliegenden Erfindung liegt demgegenüber die Aufgabe zugrunde, ein Verfahren der eingangs definierten Art vorzustellen, in welchem (oder durch das) Festbrennstoffe, insbesondere organische Festbrennstoffe wie beispielsweise biogene Abfallstoffe, insbesondere Klärschlamm, Papierschlamm, Trester, Spelzen, Mist, Schalen oder dergleichen in einem stabilen Prozess besonders kostengünstig zu Synthesegas vergast werden können, so dass das Synthesegas geeignet ist, motorisch, insbesondere mittels einer Gasturbine, genutzt zu werden.

### Kurze Beschreibung der Erfindung

Diese Aufgabe wird auf ebenso überraschend einfache wie wirkungsvolle Weise sowie mit ohne Weiteres zur Verfügung stehenden technischen Mitteln dadurch gelöst, dass der weitere Reaktor als Wirbelschicht-Reaktor ausgebildet ist, welcher mittels Luftzufuhr mit einer Geschwindigkeit oberhalb der minimalen Lockerungsgeschwindigkeit des Bettmaterials der Wirbelschicht des Wirbelschicht-Reaktors fluidisiert wird, dass dem Pyrolyse-Reaktor als organischer Festbrennstoff ein biogener Abfallstoff mit einem Aschegehalt von mindestens 20% der Feststoffmasse des Festbrennstoffs zugeführt wird, und dass der organische Festbrennstoff im Pyrolyse-Reaktor in Pyrolyse-Öl, Pyrolyse-Koks und Pyrolyse-Gas aufgespalten wird, dass zur Erwärmung des Gases heißes Produktgas aus dem Wirbelschicht-Reaktor verwendet wird, und dass die Luftzufuhr in den Wirbelschicht-Reaktor mit einem Luftstrom von unten oder von der Seite erfolgt, der gerade ausreichend groß ist, um die Verwirbelungs- und Crack-Prozesse im Wirbelschicht-Reaktor in Gang zu halten und die Luftzufuhr mit einer Geschwindigkeit betrieben wird, die maximal 20% über der zum Betrieb des Wirbelschicht-Reaktors minimal erforderlichen Lockerungsgeschwindigkeit liegt.

### Wirkungsweise der Erfindung und weitere Vorteile gegenüber dem Stand der Technik

Die vorliegende Erfindung schlägt also ein Produktionsverfahren von Synthesegas aus organischem Festbrennstoff vor, welches ermöglicht, einen biogenen Abfallstoff mit hohem Aschegehalt mit einer Pyrolyse-Schnecke zu fördern und gleichzeitig zu pyrolysieren bzw. zu thermolysieren, wobei anschließend alle Produkte der Pyrolyse, insbesondere Pyrolyse-Öl, Pyrolyse-Koks und Pyrolyse-Gas, dem Wirbelschicht-Reaktor zugeführt werden. Somit wird es möglich, den biogenen Abfallstoff möglichst umfassend zu vergasen und dabei entstehende Teere bereits im Prozess selbst zu behandeln. Vorteilhaft ist dabei, dass nicht nur der Pyrolyse-Koks, sondern dass alle Pyrolyse- bzw. Thermolyse-Produkte dem Wirbelschicht-Reaktor zugeführt werden. Auf diese Art wird vermieden, dass verschiedene Ströme parallel koordiniert werden müssen.

Zudem wird das Pyrolyse-Gas von unten her dem Wirbelschicht-Reaktor zugeführt. Dadurch wird auch das Pyrolyse-Gas im Wirbelschicht-Reaktor einer sauerstoffreichen Zone ausgesetzt, in der Teer aufgespalten bzw. verbrannt wird. Dabei wird in besonders vorteilhafterweise auch der Umstand genutzt, dass der Pyrolyse-Koks die Zersetzung von in dem Pyrolyse-Gas enthaltenen Teer katalytisch unterstützt. Dies gelingt insbesondere auch aufgrund der Erkenntnis, dass Pyrolyse-Koks eine größere spezifische Oberfläche aufweist als die verwendeten ursprünglichen Festbrennstoffe.

Somit sieht dieses Verfahren bereits eine primäre Teerbehandlung, insbesondere für sonst schlecht vergasbare biogene Abfallstoffe, vor. Es ergibt sich ein homogenes, teerarmes Synthesegas.

Das Verfahren eignet sich in vorteilhafterweise auch und gerade für Festbrennstoffe mit hohen Ascheschmelztemperaturen und Aschedichten sowie hohen Aschegehalten, da es für das Verfahren gemäß der Erfindung nicht erforderlich ist, dass entstehender Staub als Flugasche den Reaktor verlässt. Somit lässt sich das Verfahren gemäß der Erfindung bei unterschiedlichsten biogenen Abfallstoffen wie beispielsweise Klärschlamm, Spelzen, Mist oder Schalen einsetzen.

Biogene Abfallstoffe mit hohen Aschegehalten von mindestens 20% der Feststoffmasse des Festbrennstoffs können somit teerarm vergast werden.

### Bevorzugte Ausführungsformen der Erfindung

Ganz besonders bevorzugt ist eine Klasse von Ausführungsformen des erfindungsgemäßen Verfahrens, bei denen der als organischer Festbrennstoff dem Pyrolyse-Reaktor zugeführte biogene Abfallstoffe Trockengehalte zwischen 80% und 98% aufweist und insbesondere Klärschlamm und/oder Papierschlamm und/oder Trester umfasst.

Der Wirbelschicht-Reaktor kann stationär oder zirkulierend betrieben werden.

Auch kann der Pyrolyse-Reaktor mehrere Pyrolyse-Schnecken aufweisen. Der Pyrolyse-Reaktor kann auch eine Doppel- oder Mehrfachschnecke aufweisen. Mit anderen Worten können auch mehrere Schnecken für einen Wirbelschicht-Reaktor zum Einsatz kommen.

Bevorzugt ist es, wenn der als organischer Festbrennstoff dem Pyrolyse-Reaktor zugeführte biogene Abfallstoff Trockengehalte zwischen 80% und 98% aufweist und insbesondere Klärschlamm und/oder Papierschlamm und/oder Trester umfasst. Das Verfahren gemäß der Erfindung ist in besonders vorteilhafter Weise geeignet derartige, bisher nur in unbefriedigender Weise vergasbare organische Festbrennstoffe zu verarbeiten.

Eine besonders vorteilhafte Weiterbildung der Erfindung ergibt sich dadurch, dass der Wirbelschicht-Reaktor mit einer Betriebstemperatur ≤960°C gefahren wird. Dadurch kann der Bildung von Schlacke, insbesondere bei Festbrennstoffen mit niedriger Ascheschmelztemperatur, entgegengewirkt werden.

Eine weitere vorteilhafte Ausführungsform der Erfindung ergibt sich, wenn die Beheizung der Pyrolyse-Schnecke durch erwärmte Luft erfolgt. Somit wird der Pyrolyse-Reaktor nicht mit staubigem Synthesegas belastet, wodurch eine vorzeitige Abnutzung von Gaskanälen des Pyrolyse-Reaktors vermieden werden kann.

Auch kann zu einer weiteren Temperaturerhöhung des Gases ein Thermolyse-Brenner eingesetzt werden.

Besonders bevorzugt ist auch eine Ausführungsform der Erfindung, bei der die Luftzufuhr in den Wirbelschicht-Reaktor mit einer Geschwindigkeit betrieben wird, die lediglich zwischen 5% und 20%, vorzugsweise etwa 10% über der zum Betrieb des Wirbelschicht-Reaktors minimal erforderlichen Lockerungsgeschwindigkeit liegt. Somit wird ein sich im Wirbelschicht-Reaktor ausbildendes Wirbelbett sehr nahe an seinem Lockerungspunkt gefahren. Dadurch wird der Kontakt zwischen Pyrolyse-Gas und Wirbelbett-Material weiter optimiert. Dadurch wird die katalytische Teerspaltung am Pyrolyse-Koks zusätzlich zu der Gasphasenreaktion mit Sauerstoff intensiviert. Insbesondere kann es dazu vorgesehen sein, dass der Wirbelschicht-Reaktor stationär betrieben wird.

Eine besonders vorteilhafte Ausgestaltung des Verfahrens ergibt sich, wenn für eine primäre Schwefelbindung schon im Wirbelschicht-Reaktor kalziumhaltiges Material, insbesondere Kalziumkarbonat, Kalzit oder Kalziumhydroxid zugemischt ist. Dazu kann beispielsweise das kalziumhaltige Material dem ursprünglichen Festbrennstoff beigemengt werden. Dadurch können bereits frühzeitig große Teile flüchtigen Schwefels als Kalziumsulfid gebunden und über die Asche aus dem Prozess entfernt werden.

Besonders bevorzugt ist auch eine Ausführungsform der Erfindung, bei der Asche, die entweder bereits granulatförmig vorliegt oder die zu Granulat weiterverarbeitet wird, als Bettmaterial für die Wirbelschicht wiederverwertet wird.

Zur Durchführung des Verfahrens gemäß der Erfindung eignet sich besonders eine neuartige Vorrichtung, die sich darin auszeichnet, dass die Querschnittsfläche des lichten Innenraums des Wirbelschicht-Reaktors von unten nach oben hin zunimmt, insbesondere zumindest abschnittsweise nach Art eines umgekehrten Konus. Dazu kann der Wirbelschicht-Reaktor in seinem unteren Bereich vorteilhafterweise zumindest abschnittsweise exzentrisch ausgeformt sein. Da die Gasmenge von unten nach oben zunimmt, kann somit in vorteilhafter Weise die Strömungsgeschwindigkeit im Wirbelschicht-Reaktor entlang des Wirbelschicht-Reaktors nahezu konstant gehalten werden.

Ebenso erweist sich eine Vorrichtung zur Durchführung des erfindungsgemäßen Verfahrens als günstig, bei der seitlich am Wirbelschicht-Reaktor, vorzugsweise am Ende der Wirbelschicht und am Beginn des Gasraumes, eine Öffnung zum gravitativen Austrag der im Betrieb im Wirbelschicht-Reaktor anfallenden Asche vorhanden ist. Dabei ist unter Gasraum der Bereich innerhalb des Wirbelschicht-Reaktors zu verstehen, der oberhalb der Wirbelschicht an diese angrenzt. Besonders vorteilhaft ist dabei, dass dadurch aus der Wirbelschicht auch große Mengen an Asche abgezogen werden können. Die Öffnung kann als Überlauf dienen, sodass sich die Wirbelschicht wie ein überlaufender Trog verhält, wodurch der Ascheaustrag selbsttätig geregelt werden kann.

Des Weiteren kann eine Einrichtung zur Zuführung von zunächst kalter Luft im Gegenstrom zur ausgetragenen Asche aus dem Wirbelschicht-Reaktor vorhanden sein. In einer Wirbelschicht lassen sich Glühverluste unter 1% in der Regel nicht realisieren. Durch die zusätzliche Lufteindüsung im Ascheaustrag kann die Asche vom verbleibenden Kohlenstoff befreit und das resultierende Abgas in die Wirbelschicht eingeleitet werden. Auch kann dadurch Wärme aus der Asche rückgewonnen werden, sodass sich die Energieeffizient der Vorrichtung verbessert. Dabei ist es besonders vorteilhaft, wenn die zunächst kalte Luft aus dem Pfad der dem Wirbelschicht-Reaktor zugeführten Luft für die Vergasung entnommen wird. Dadurch kann sichergestellt werden, dass selbst bei wechselnden Druckverhältnissen in der Anlage stets genügend Durchfluss vorhanden ist.

Zur alternativen Weiterbildung kann vorgesehen sein, dass im Bereich zwischen dem Brennstoffeinlass und dem Ascheaustrag des Wirbelschicht-Reaktors seitlich eine weitere Einrichtung zur Zuführung von Luft in den Wirbelschicht-Reaktor vorhanden ist, die vorzugsweise als By-pass-Luftstrom der von unten her zur Fluidisierung erfolgenden Luftzufuhr in den Wirbelschicht-Reaktor entnommen wird. Besonders bevorzugt ist, wenn im Bereich oberhalb des Ascheaustrags im Gasraum des Wirbelschicht-Reaktors seitlich eine zusätzliche Einrichtung zur Zuführung von Luft in den Wirbelschicht-Reaktor vorhanden ist, die vorzugsweise als By-pass-Luftstrom der zu Fluidisierung erfolgenden Luftzufuhr in den Wirbelschicht-Reaktor entnommen wird. Diese zusätzlichen Luftzuführungen können dabei über den Umfang des Wirbelschicht-Reaktors gleichmäßig verteilt angeordnet sein. Durch derartige zusätzliche Luftzuführungen ergeben sich zusätzliche Steuerungsmöglichkeiten zur Steuerung der Prozessabläufe innerhalb des Wirbelschicht-Reaktors. Insbesondere ermöglichen diese zusätzlichen Luftzuführungen eine weiter verbesserte, kontrollierte Verbrennung von Teer durch die gestufte Zugabe von Luft bzw. Sauerstoff.

Besonders vorteilhaft ist auch eine Ausführungsform, bei der, vorzugsweise nach einer ersten Kühlstufe und einer Entstaubungsvorrichtung, eine Einrichtung zur Kühlung von aus dem Wirbelschicht-Reaktor entnommenen Produktgas, insbesondere mit einem Venturi-Wäscher, und/oder eine Einrichtung zur Aerosolabscheidung, insbesondere mit einem Zentrifugal-Wäscher und/oder einer Einrichtung zur Ammoniakabscheidung, insbesondere mit einem Sprüh-Wäscher, vorhanden ist. Besonders bevorzugt ist es, alle drei obigen Einrichtungen in Serie geschaltet vorzusehen. Ebenso sind Weiterbildungen bevorzugt, bei denen eine oder mehrere Einrichtungen zur Entfernung von Quecksilber und/oder Schwefelwasserstoff und/oder Kohlenwasserstoffen aus dem vom Wirbelschicht-Reaktor entnommen Produktgas vorhanden sind. Vorzugsweise arbeiten diese auf Basis von Adsorption oder Filterung, insbesondere auf Basis von Aktivkohle-Filterung. Somit kann die Qualität des erzeugten Synthesegases weiter verbessert werden. Da Klärschlammasche eine hohe Porosität und/oder eine hohe spezifische Oberfläche aufweist, kann in besonders vorteilhafter Ausgestaltung der Erfindung anstelle von Aktivkohle, insbesondere zur Filterung von H₂S, anfallende Klärschlammasche verwendet werden.

Weitere Merkmale und Vorteile des erfindungsgemäßen Verfahrens ergeben sich aus der nachfolgenden detaillierten Beschreibung von Ausführungsbeispielen der Erfindung, anhand der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

### Detaillierte Beschreibung der Erfindung

Die Erfindung ist in der Zeichnung schematisch dargestellt und wird anhand eines Ausführungsbeispiels näher erläutert.

Die -einzige- Figur zeigt eine schematische Darstellung einer Ausführungsform der Vorrichtung zur Durchführung des Verfahrens gemäß der Erfindung.

Im Einzelnen stellt die Figur eine Vergasungsvorrichtung 1 dar. Diese dient zur Umsetzung des Verfahrens zur Produktion von Synthesegas zum Betreiben eines Verbrennungsmotors aus organischem Festbrennstoff gemäß der Erfindung. Mittels einer Brennstoffzufuhr 2a wird Brennstoff einem Brennstoffsilo 3 zugeführt. Als Brennstoff kommt in diesem Ausführungsbeispiel Klärschlamm in Form von Klärschlammpellets mit 90% Trockensubstanz zum Einsatz. Dem Brennstoff wird im Brennstoffsilo 3 eine vordefinierte Menge Kalziumkarbonat hinzudosiert. Die Zugabe von Kalziumkarbonat dient dabei zur späteren primären Schwefelreduktion in der Gasphase.

Der so vorkonfigurierte Brennstoff wird anschließend in einen Pyrolyse-Reaktor 4 eingebracht. Der Pyrolyse-Reaktor 4 weist eine Pyrolyse-Schnecke 5, in diesem Fall eine Doppelschnecke, auf. Der Pyrolyse-Reaktor 4 wird durch Zuführung von Heizgas temperiert. Dazu wird Luft in einer Luftvorwärmung 12 vorgewärmt und nach Bedarf durch einen Thermolyse-Brenner 6, der in diesem Ausführungsbeispiel mit Faulgas betrieben ist, zusätzlich aufgeheizt. Die Aufheizung erfolgt dabei extern durch das Heizgas. Somit wird eine Vermengung von Heizgas mit Pyrolyse-Edukten bzw. Produkten vermieden. Die Vorstufe wird bevorzugt in einem Temperaturfenster zwischen 600-650°C betrieben. In der vorliegenden Ausführungsform der Erfindung wird der Pyrolyse-Prozess sauerstofffrei geführt, sodass dieser einer Thermolyse entspricht. Während der Pyrolyse bzw. Thermolyse entstehen als Prozessprodukte Pyrolyse-Gas, Pyrolyse-Koks sowie Pyrolyse-Öl.

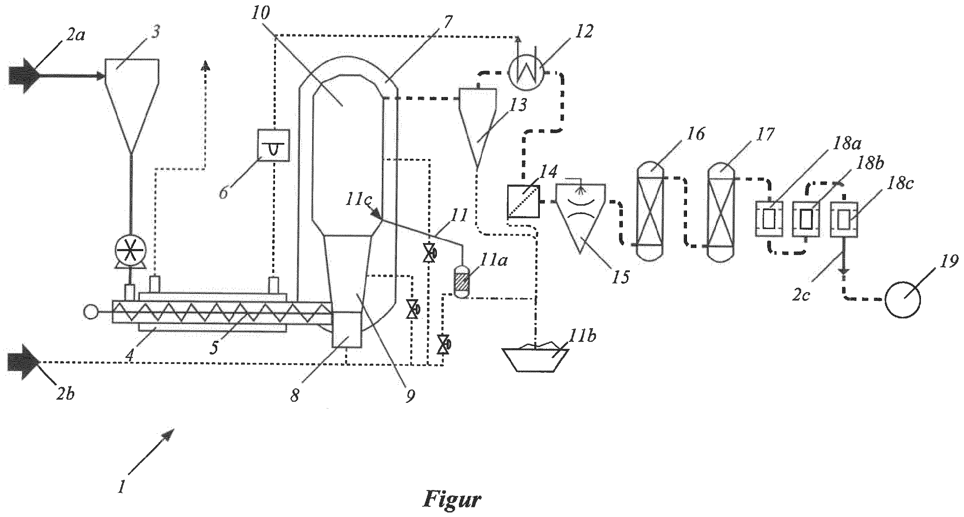

In einem weiteren Verfahrensschritt werden die Prozessprodukte aus dem Pyrolyse-Reaktor 4 auf einen Wirbelschicht-Reaktor 7 gegeben. In diesem Ausführungsbeispiel ist eine in der Fig. 1 nicht näher dargestellte Eintragsschnecke vorgesehen. Mittels der Eintragsschnecke werden die Pyrolyse-Produkte von unten in den Wirbelschicht-Reaktor 7 eingebracht.

Unterseitig des Wirbelschicht-Reaktors 7 ist eine Windbox 8 angeordnet. Durch diese Windbox 8 wird Vergasungsluft von einer Vergasungsluftzufuhr 2c dem Wirbelschicht-Reaktor 7 zugeführt. Der Wirbelschicht-Reaktor 7 verläuft im Bereich einer sich ausbildenden Wirbelschicht 9 exzentrisch und konisch nach oben hin sich weitend. An die Wirbelschicht 9 schließt sich ein Gasraum 10 an. Im Sinne zweier Bypässe wird ein Teil der Vergasungsluft aus dem zur Windbox 8 führenden Strang abgezweigt und zu einem Teil im Bereich der Wirbelschicht 9 sowie zu einem anderen Teil im Bereich des Gasraumes 10 eingespeist. Knapp oberhalb der Wirbelschicht 9 befindet sich ein Ascheaustragskanal 11, der in einer in einer Wandung des Wirbelschicht-Reaktors 7 befindliche Öffnung 11c mündet. Der Ascheaustragskanal 11 weist eine Schräge auf, sodass Asche aus dem Innenraum des Wirbelschicht-Reaktors 7 gravitativ über den Ascheaustragskanal 11 ausgetragen werden kann. Von dort gelangt die Asche über einen Kühlreaktor 11a in einen Ascheauffang 11b. Bedarfsweise wird Asche hieraus auch als Aktivkohle-Ersatz entnommen und in weiter unten näher beschriebenen Filtereinrichtungen 18a, 18b und 18c eingesetzt.

Ein Teil der von der Vergasungsluftzufuhr 2b bezogenen Vergasungsluft wird im Gegenstrom durch den Ascheaustragskanal 11 in den Wirbelschicht-Reaktor 7 geleitet. Dadurch kommt es zu einer Nach-Verglühung der Asche sowie zu einem Wärmeübertrag von der heißen Asche auf die anfangs kalte Vergasungsluft.

Die Zufuhr von Vergasungsluft ist derart eingestellt, dass die Luftzufuhr gerade ausreichend groß ist um Verwirbelungs- und Crackprozesse im Wirbelschicht-Reaktor 7 in Gang zu halten. Insbesondere wird die Luftzufuhr mit einer Geschwindigkeit von etwa 10% über der zum Betrieb des Wirbelschicht-Reaktors 7 minimal erforderlichen Lockerungsgeschwindigkeit betrieben. Dadurch wird dem Pyrolyse-Gas ein guter Kontakt zum Bettmaterial der Wirbelschicht gewährt. Ferner kommt es bereits in der Wirbelschicht 9 zu einer katalytischen Teerspaltung von in den Prozessprodukten des Pyrolyse-Reaktors 4 enthaltenem Teer am Pyrolyse-Koks.

Sobald der sich im Wirbelschicht-Reaktor 7 ausbildende Materialstrom die Öffnung 11c des Ascheaustragskanals 11 erreicht, wird Asche aus dem Materialstrom gravitativ ausgetragen.

Die Betriebstemperatur des Wirbelschicht-Reaktors 7 wird auf ≤960°C geregelt. In alternativen Ausführungen der Erfindung ist es dabei auch vorgesehen, die Betriebstemperatur auf die jeweilige Ascheschmelztemperatur des verwendeten Festbrennstoffs abzustimmen. Sobald der Materialstrom das obere Ende des Wirbelschicht-Reaktors 7 bzw. des Gasraum 10 erreicht, tritt dieser in Form heißen Synthesegases aus dem Wirbelschicht-Reaktor 7 aus.

In nachfolgenden Stufen wird dieses Synthesegas entstaubt, gereinigt und die enthaltene Wärme rückgewonnen. Dazu wird zunächst das Synthesegas in einer Entstaubungsvorrichtung 13 geführt. In diesem Ausführungsbeispiel ist der Entstaubungsvorrichtung 13 ein Zyklonabscheider zur Entfernung des überwiegenden Anteils an noch enthaltener Flugasche. Anschließend wird das in dieser Phase noch etwa 800°C heiße Synthesegas über die Heizgasvorwärmung 12 geführt, die wie zuvor beschrieben zur Vorwärmung des Heizgases des Pyrolyse-Reaktors 4 dient. Mit etwa 400°C tritt das Synthesegas aus der Heizgasvorwärmung 12 wieder aus und gelangt über einen Kerzenfilter 14 auf einen Venturi-Wäscher 15, durch den das Synthesegas weiter abgekühlt und gereinigt wird. Gebildete Aerosole werden nachfolgend in einer Einrichtung zur Aerosolabscheidung 16, in diesem Fall ein Zentrifugal-Wäscher, abgeschieden. Sodann wird das Synthesegas über eine Einrichtung zur Ammoniakabscheidung 17 geführt. In diesem Fall ist die Einrichtung zur Ammoniakabscheidung 17 als Sprüh-Wäscher ausgebildet.

In einer abschließenden Stufe wird das nun bereits vorgereinigte Synthesegas von verbleibenden Stör- beziehungsweise Schadstoffen befreit. Dazu wird es nach Austritt aus der Einrichtung zur Ammoniakabscheidung 17 über einen in der Fig. 1 nicht näher dargestellten Rekuperator geführt. Der Rekuperator dient zur Nebelvermeidung beziehungsweise generell zur Taupunktvermeidung. Zur Erwärmung des Synthesegases im Rekuperator wird ein Teil des Heizgas-Abgases aus dem Pyrolyse-Reaktor 4 verwendet.

Sodann gelangt das Synthesegas sequentiell auf drei Filtereinrichtungen 18a, 18b, 18c. Diese Filtereinrichtung 18a, 18b, 18c sind in diesem Ausführungsbeispiel Aktivkohlefilter bzw. Aktivkohleabsorber. Abgestimmt auf die Dimension der Filtereinrichtungen 18a, 18b, 18c sowie der benötigten Filterleistungen ist dabei ein vordefinierter Anteil der Aktivkohle durch Klärschlammasche, insbesondere aus dem Ascheauffang 11b, ersetzt. Dabei wird zu Nutze gemacht, dass die Klärschlammasche ähnlich zur Aktivkohle eine hohe Porosität und spezifische Oberfläche aufweist. Mit anderen Worten wird die Klärschlammasche als Filtermaterial zumindest teilweise weiter verwertet.

Die Filtereinrichtung 18a dient dabei zur Absonderung von in dem Synthesegas noch verbleibendem Quecksilber. Die Filtereinrichtung 18b dient zur Absonderung des noch im Synthesegas verbleibenden Schwefelwasserstoffs. Die letzte Filtereinrichtung 18c dient insbesondere zur Abscheidung von noch verbleibenden kohlenwasserstoffhaltigen Schadstoffe. Die Filtereinrichtung 18c stellt somit einen Polizeifilter dar. Das auf diese Weise erzeugte, entstaubte und gereinigte Synthesegas weist nunmehr eine Qualität auf, mit der Anforderungen an eine motorische Nutzung erfüllt werden. Somit kann das an der Filtereinrichtung 18c beziehungsweise an einem sich hieran anschließenden Synthesegasauslass verfügbare Synthesegas nunmehr beispielsweise auf einen Verbrennungsmotor 19 zur energetischen Nutzung gegeben werden. Der Verbrennungsmotor 19 ist dazu als Gasmotor mit angeschlossenem Generator und angeschlossener Abwärmenutzungseinrichtung im Sinne eines Blockheizkraftwerkes ausgebildet. Somit kann der ursprünglich zugeführte Festbrennstoff, insbesondere Klärschlamm, umfassend energetisch, insbesondere elektrisch und thermisch, genutzt werden.

### Referenzliste:

DE 10 2010 012 487 A1
WO 2011/ 110 138 A1
DE 10 2007 012 452 A1
DE 10 2010 018 197 A1
WO 02/ 004 574 A1
WO 2010/ 015 593 A2

### Bezuaszeichenliste:

- 1: Vergasungsvorrichtung
- 2a: Brennstoffzufuhr
- 2b: Vergasungsluftzufuhr
- 2c: Synthesegasauslass
- 3: Brennstoff-Silo
- 4: Pyrolyse-Reaktor
- 5: Pyrolyse-Schnecke
- 6: Thermolyse-Brenner
- 7: Wirbelschicht-Reaktor
- 8: Windbox
- 9: Wirbelschicht
- 10: Gasraum
- 11: Ascheaustragskanal
- 11a: Kühlreaktor
- 11b: Ascheauffang
- 11c: Öffnung
- 12: Heizgasvorwärmung
- 13: Entstaubungsvorrichtung
- 14: Kerzenfilter
- 15: Venturi-Wäscher
- 16: Einrichtung zur Aerosolabscheidung
- 17: Einrichtung zur Ammoniakabscheidung
- 18a-c: Filtereinrichtungen
- 19: Verbrennungsmotor

## Patentansprüche

1. Produktionsverfahren von Synthesegas zum Betreiben eines Verbrennungsmotors (19) aus organischem Festbrennstoff, welcher in einem Pyrolyse-Reaktor (4) ohne Sauerstoffzufuhr in Pyrolyse-Produkte aufgespalten wird, wobei anschließend sämtliche Pyrolyse-Produkte aus dem Pyrolyse-Reaktor (4) von unten her einem weiteren Reaktor zugeführt werden, wobei ein im weiteren Reaktor erzeugtes Synthesegas dem weiteren Reaktor als Produktgas entnommen und direkt oder indirekt dem Verbrennungsmotor (19) zugeführt wird, und wobei der Pyrolyse-Reaktor (4) mit mindestens einer durch erwärmtes Gas extern beheizten Pyrolyse-Schnecke (5) zur Förderung des Festbrennstoffs betrieben wird,
**dadurch gekennzeichnet,**
**dass** der weitere Reaktor als Wirbelschicht-Reaktor (7) ausgebildet ist, welcher mittels Luftzufuhr mit einer Geschwindigkeit oberhalb der minimalen Lockerungsgeschwindigkeit des Bettmaterials der Wirbelschicht (9) des Wirbelschicht-Reaktors (7) fluidisiert wird, dass dem Pyrolyse-Reaktor (4) als organischer Festbrennstoff ein biogener Abfallstoff mit einem Aschegehalt von mindestens 20% der Feststoffmasse des Festbrennstoffs zugeführt wird,
**dass** der organische Festbrennstoff im Pyrolyse-Reaktor (4) in Pyrolyse-Öl, Pyrolyse-Koks und Pyrolyse-Gas aufgespalten wird, dass zur Erwärmung des Gases heißes Produktgas aus dem Wirbelschicht-Reaktor (7) verwendet wird,
und **dass** die Luftzufuhr in den Wirbelschicht-Reaktor (7) mit einem Luftstrom von unten oder von der Seite erfolgt, der gerade ausreichend groß ist, um die Verwirbelungs- und Crack-Prozesse im Wirbelschicht-Reaktor (7) in Gang zu halten und wobei die Luftzufuhr
mit einer Geschwindigkeit betrieben wird, die maximal 20% über der zum Betrieb des Wirbelschicht-Reaktors (7) minimal erforderlichen Lockerungsgeschwindigkeit liegt.

2. Verfahren nach Anspruch 1, **dadurch gekennzeichnet, dass** der als organischer Festbrennstoff dem Pyrolyse-Reaktor (4) zugeführte biogene Abfallstoff Trockengehalte zwischen 80% und 98% aufweist und insbesondere Klärschlamm und/oder Papierschlamm und/oder Trester umfasst.

3. Verfahren nach Anspruch 2, **dadurch gekennzeichnet, dass** der Wirbelschicht-Reaktor (7) mit einer Betriebstemperatur ≤960°C gefahren wird.

4. Verfahren nach einem der vorhergehenden Ansprüche, **dadurch gekennzeichnet, dass** die Pyrolyse-Schnecke (5) durch erwärmte Luft extern beheizt wird.

5. Verfahren nach einem der vorhergehenden Ansprüche, **dadurch gekennzeichnet, dass** zu einer weiteren Temperaturerhöhung des Gases ein Thermolyse-Brenner (6) eingesetzt wird.

6. Verfahren nach einem der vorhergehenden Ansprüche, **dadurch gekennzeichnet, dass** die Luftzufuhr mit einer Geschwindigkeit betrieben wird, die lediglich zwischen 5% und 20%, vorzugsweise etwa 10% über der zum Betrieb des Wirbelschicht-Reaktors (7) minimal erforderlichen Lockerungsgeschwindigkeit liegt.

## Claims

1. A production method of synthesis gas for operating an internal combustion engine (19) made of organic solid fuel, which is split into pyrolysis products in a pyrolysis reactor (4) without supply of oxygen, wherein subsequently all pyrolysis products from the pyrolysis reactor (4) from below are fed to a further reactor, wherein a synthesis gas generated in a further reactor is taken from the further reactor as product gas and fed directly or indirectly to the internal combustion engine (19), and wherein the pyrolysis reactor (4) is operated with at least one pyrolysis screw (5), which is heated externally by heated gas, for conveying the solid fuel,
**characterized in**
**that** the further reactor is designed as a fluidized bed reactor (7) which is fluidized by means of air supply at a speed above the minimum loosening speed of the bed material of the fluidized bed (9) of the fluidized bed reactor (7), that a biogenic waste material having an ash content of at least 20% of the solid mass of the solid fuel is fed to the pyrolysis reactor (4) as organic solid fuel, that the organic solid fuel in the pyrolysis reactor (4) is split into pyrolysis oil, pyrolysis coke and pyrolysis gas, that hot product gas from the fluidized bed reactor (7) is used to heat the gas, and that the air supply is fed into the fluidized bed reactor (7) with an air flow from below or from the side, which is just large enough to keep the swirling and cracking processes in the fluidized bed reactor (7) running, and wherein the air supply is operated at a speed, which is no more than 20% above the minimum loosening speed required for the operation of the fluidized bed reactor (7).

2. The method according to claim 1, **characterized in that** the biogenic waste material which is fed to the pyrolysis reactor (4) as organic solid fuel has dry contents between 80% and 98% and in particular comprises sewage sludge and/or paper sludge and/or pomace.

3. The method according to claim 2, **characterized in that** the fluidized bed reactor (7) is run at an operating temperature ≤960° C.

4. The method according any one of the preceding claims, **characterized in that** the pyrolysis screw (5) is heated externally by heated air.

5. The method according any one of the preceding claims, **characterized in that** a thermolysis burner (6) is used for further increasing the temperature of the gas.

6. The method according any one of the preceding claims, **characterized in that** the air supply is operated at a speed which is only between 5% and 20%, preferably about 10%, above the minimum loosening speed required for the operation of the fluidized bed reactor (7).

## Revendications

1. Procédé de production de gaz de synthèse pour actionner un moteur à combustion (19) à partir de combustible solide organique qui est décomposé en produits de pyrolyse dans un réacteur à pyrolyse (4) sans apport d'oxygène, dans lequel ensuite tous les produits de pyrolyse du réacteur à pyrolyse (4) sont acheminés par le bas à un autre réacteur, dans lequel un gaz de synthèse produit dans l'autre réacteur est retiré de l'autre réacteur en tant que gaz produit et est acheminé directement ou indirectement au moteur à combustion (19), et dans lequel le réacteur à pyrolyse (4) est actionné avec au moins une vis sans fin à pyrolyse (5) chauffée de façon externe par du gaz chauffé pour transporter le combustible solide,
**caractérisé en ce que**
l'autre réacteur est conçu comme un réacteur à lit fluidisé (7) qui est fluidisé au moyen d'apport d'air avec une vitesse supérieure à la vitesse de fluidisation minimale du matériau de lit du lit fluidisé (9) du réacteur à lit fluidisé (7), **en ce qu'**un déchet biogène est acheminé en tant que combustible solide organique au réacteur à pyrolyse (4) avec une teneur en cendre d'au moins 20 % de la masse solide du combustible solide, **en ce que** le combustible solide organique est décomposé dans le réacteur à pyrolyse (4) en huile de pyrolyse, en coke de pyrolyse et en gaz de pyrolyse, **en ce que** pour chauffer le gaz, un gaz produit chaud du réacteur à lit fluidisé (7) est utilisé, et **en ce que** l'apport d'air dans le réacteur à lit fluidisé (7) s'effectue avec un courant d'air du bas ou du côté qui est juste assez grand pour poursuivre le processus de turbulence et de craquage dans le réacteur à lit fluidisé (7) et dans lequel l'apport d'air est actionné à une vitesse qui est au maximum de 20 % supérieure à la vitesse de fluidisation nécessaire au minimum pour actionner le réacteur à lit fluidisé (7).

2. Procédé selon la revendication 1, **caractérisé en ce que** le déchet biogène acheminé en tant que combustible solide organique au réacteur à pyrolyse (4) présente des teneurs en matière sèche entre 80 % et 98 % et comprend en particulier des boues d'épuration et/ou des boues de papèterie et/ou du marc de raisin.

3. Procédé selon la revendication 2, **caractérisé en ce que** le réacteur à lit fluidisé (7) est conduit avec une température d'actionnement ≤ 960 °C.

4. Procédé selon l'une quelconque des revendications précédentes, **caractérisé en ce que** la vis sans fin à pyrolyse (5) est chauffée de façon externe par de l'air chauffé.

5. Procédé selon l'une quelconque des revendications précédentes, **caractérisé en ce que** pour une autre augmentation de la température du gaz, un brûleur à thermolyse (6) est utilisé.

6. Procédé selon l'une quelconque des revendications précédentes, **caractérisé en ce que** l'apport d'air est actionné à une vitesse qui est seulement entre 5 % et 20 %, de préférence d'environ 10 % supérieure à la vitesse de fluidisation nécessaire au minimum pour actionner le réacteur à lit fluidisé (7).
